# EUROPEAN PATENT APPLICATION

(11) **EP 4 418 155 A1**
(43) Date of publication of application: **21.08.2024**
(21) Application number: 23305194.5
(22) Date of filing: 14.02.2023
(51) Int. Cl.: G06F 21/53, G06F 9/50, G06F 21/57, G06F 21/62

(54) **A METHOD FOR CARRYING OUT A COMPUTING JOB ON A HIGH PERFORMANCE COMPUTING, HPC, MACHINE AND HPC MACHINE FOR CARRYING OUT SUCH A METHOD**

(71) Applicant: BULL SAS, 78340 Les Clayes-Sous-Bois (FR)
(72) Inventor: GANTIKOW, Holger, 72138 Kirchentellinsfurt (DE); ALIYEV, Nijat, 85-309 Bydgoszcz (PL)
(74) Representative: IPAZ

(57) **Abstract**

The invention relates to a method (100) for carrying out a computing job for a client on a High Performance Computing, HPC, machine, said method (100) comprising the following steps:
- selecting (106), in said HPC machine, the resources for carrying out said computing job, said resources forming a so-called compute environment comprising one or several computing nodes, and
- performing (126) the computing job in said compute environment;
wherein said method (100) also comprises before the step (126) of performing the computing job, a step (116) for isolating said compute environment from the rest of the HPC machine so that interaction with said compute environment is restricted to said client.

It also relates to a HPC machine configured for carrying out such a method.

## Description

### Field of the invention

The present invention relates to a method for carrying out a computing job on a High Performance Computing, HPC, machine. It also relates to a HPC machine configured for carrying out such a method.

The field of the invention is of High Performance Computing machines.

### Background

The general purpose of High Performance Computing is to perform computations as fast as possible. To attain maximum computing speed, the data exchange between computing nodes must be as fast as possible, and the computing power of each node must be fully dedicated to the computing. To achieve this goal, the workload is typically spread across multiple nodes and, optionally, use of high throughput and low latency specialized interconnects is made.

It is also important to ensure the security of the data related to the computing, i.e. input data provided to the computing nodes, as well as output data provided by the computing nodes during or at the end of the computing job. Typical security solutions are available for ensuring security of data at rest in the HPC machine before or after computation, or in transit to/from the HPC machine, for example by encrypting said data. But, those solutions fall short in protecting data under computation, i.e. data that is actively used by the computing node or stored in memory during computation. There is currently no technique for protecting data involved in a computation job during execution of said computation job.

A purpose of the present invention is to overcome at least one of these drawbacks.

Another purpose of the present invention is to propose a more secure method for carrying out a computing job on a HPC machine.

It also a purpose of the present invention to provide a method for carrying out a computing job on a HPC machine providing better security for data that is actively used during computation.

### Summary of the invention

The invention makes it possible to achieve at least one of these aims by a method for carrying out a computing job for a client on a High Performance Computing, HPC, machine, said method comprising the following steps:
- selecting, in said HPC machine, the resources for carrying out said computing job, said resources forming a so-called compute environment comprising one or several computing nodes, and
- performing the computing job in said compute environment;
wherein said method also comprises before the step of performing the computing job, a step for isolating said compute environment from the rest of the HPC machine so that interaction with said compute environment is restricted to said client.

The present invention proposes a method for carrying out a computation job in a HPC machine. According to the invention, the resources that are involved in the computation job are selected and gathered within a so-called compute environment. This compute environment is then isolated from the other resources of the HPC machine, and more generally from the rest of the HPC machine, so that there is no interaction between said compute environment and the rest of the HPC machine. The interaction with said compute environment is restricted to the client for which the computation job is carried out.

With the present invention, data that is actively used for the computing job, thus available in an unencrypted form in the compute environment, is accessible only to the client and is not accessible to third parties, even to the party that is running/owning the HPC machine. Data that is actively used, i.e. data input to the computing nodes or output data provided during/or at the end of the computing job, stays within the compute environment the access of which is restricted to the client.

Thus, the present invention proposes a more secure method for carrying out a computing job. With the method according to the invention, it is possible to secure data during every phase of the computation job, i.e. not only when data is transferred to, or from, the HPC machine before or after the execution of the computing job, but also during the computation phase during which the computing job is executed.

In some embodiments, the method according to the invention may further comprise, before the isolation step, a step for loading data to be computed, also called input data, in storage means located in the compute environment, in encrypted form.

Thus, when data is transferred to the compute environment, said data is still encrypted and protected against malicious actions from third parties, for example.

The input data may be loaded to the storage means located in the compute environment from a device located outside the HPC machine, such as from a server belonging to the user.

In some embodiments, the input data may be loaded to storage means located in the compute environment from storage means located in the HPC machine. In this case, the method according to the invention may further comprise a step for loading said data to be computed, from outside of the HPC machine, to said storage means, in encrypted form.

Preferentially, the method according to the invention may further comprise, after the isolation step, a step for decrypting the loaded input data.

Thus, data remains encrypted as long as the compute environment is not isolated from the rest of the HPC machine, and is decrypted if, and only if, the compute environment is isolated. This provides enhanced security for input data used by the computing job. Indeed, once the compute environment is isolated, there is no interaction possible with said compute environment except for the user to whom the computing job belongs. In these conditions, input data used by the computing job may be decrypted without risk for its security.

Data may be loaded to storage means in the HPC machine, respectively to storage means located in the compute environment, through wired or wireless communication link.

In some embodiments, the method according to the invention may further comprise, before the isolating step:
- a step for checking the compliance of at least one of the components of the compute environment to at least one technical specification specific to the computing job, and
- in case said component is not compliant, a step for configuring said component rendering said component compliant with said at least one technical specification.

At least one technical specification may refer to any technical aspect of at least one component of the compute environment. According to non limitative examples, at least one technical specification may relate to:
- the presence of a software program, such as an anti-virus program, an encrypting/decrypting program, etc.;
- the version of at least one program;
- the presence of a security patch for at least one program,
- the version of an operating system,
- the setting of at least one configuration parameter. For example, a configuration parameter may be set to a specific value, a setting value allowing only a specific cipher suite,
- etc.
in the compute environment, or on at least one component of the compute environment.

If a technical specification is not met by the compute environment, the method according to the invention may comprise a configuration step for addressing this issue. The configuring step may comprise at least one of the following:
- downloading and installing a missing software program, such as an anti-virus program, an encrypting/decrypting program, etc.;
- upgrading or downgrading at least one program;
- downloading and installing a security patch for at least one program,
- upgrading or downgrading an operating system,
- adding, removing or modifying at least one configuration parameter
- etc.
in the compute environment, or on at least one component of the environment.

At least one technical specification may be provided by the user to whom the computing job belongs.

At least one technical specification may be indicated in a specification file provided by the user, or with the computing job.

At least one technical specification may relate to the nature of data concerned by the computing job, for example the input data provided or to the output data of the computing job.

At least one technical specification may relate to the nature of the computation concerned by the computing job.

As indicated above, the present invention proposes isolating the compute environment, formed by the resources selected to carry out the computing job, from the rest of the compute environment so that, interaction with said compute environment is restricted to the user to whom the computing job belongs.

Such an isolation of the compute environment may be done in various ways, or may comprise various operations.

In some non limitative embodiments, the step for isolating the compute environment may comprise at least one of the following operations:
- preventing access to said compute environment to any third party. For example, this may be done through an authentication client, or a so-called quarantine manager, regulating access to said compute environment;
- preventing the compute environment from sending data to outside the compute environment. For example, this may be done by stopping or limiting the communication link between the compute environment and the rest of the HPC machine, specifically the administrator/owner of the HPC resource provider;
- preventing the compute environment from receiving data from outside the compute environment. For example, this may be done by stopping or limiting the communication link between the compute environment and the rest of the HPC machine, specifically the administrator/owner of the HPC resource provider.

In some non limitative embodiments, the step for isolating the compute environment may comprise carrying out at least one of the following operations:
- flagging at least one component of the compute environment as non-accessible;
- deploying at least one system-level configuration inside said compute environment;
- deploying at least one environmental-level configuration outside said compute environment, and more particularly on at least one network component and/or on an interconnect component.

Deployment of a system-level configuration may be done by executing one or several configuration files in said compute environment.

Deployment of an environmental-level configuration may be done by executing one or several configuration files outside said compute environment, in the HPC machine.

At least one configuration file may be generated, or written, beforehand and stored in the HPC machine.

At least one configuration file may be provided along with the computing job.

In some embodiments, the owner of the computing job may give access to a third party, for example for some limited operations, such as a debugging operation.

But, all access to the compute machine is controlled by the owner and no third party may access to the compute environment without authorization of the owner of the computing job.

In some embodiments, the method according to the invention may further comprise, after computation of the computing job, a step for encrypting data output by the computation of the computing job, while the compute environment is in isolated state.

The encryption of the output data allows security for said output data. Preferentially, the encryption of the output data may be done as soon as the computing job is finished.

The encryption of the output data may be done by an encryption program that is installed in the compute environment beforehand, for example during the configuration of the compute environment before the isolation step. Alternatively, the encryption program may be present in the compute environment before the HPC machine receives the computing job.

The encryption of the output data may be done in various ways. According to non limitative examples, the encryption of the output data may be done using an encryption key, and/or a password, from the user.

Optionally, the encrypted output data may be stored in a storage means in the compute environment, while the compute environment is in isolated state.

The method according to the invention may further comprise, after the computing job is carried out, a step for de-isolating the compute environment from the rest of the HPC machine so that interaction with said compute environment is restored.

The de-isolating step aims to restore at least one, and in particular each, of the components of the compute environment in the same configuration/state as it was when said component was selected for carrying out the computing job. Thus, said component becomes available for carrying out another computing job.

The de-isolating step may comprise at least one of the following:
- restoring access to the compute environment to third party;
- restoring capabilities of the compute environment for sending data to outside of the compute environment;
- restoring capabilities of the compute environment for receiving data from outside of the compute environment.

More particularly, the de-isolating step may comprise reversing at least one, and in particular every, configuration made during the isolation step.

Plus, the de-isolating step may comprise reversing at least one, and in particular every, configuration made during the configuring step before the isolating step.

The method according to the invention may further comprise, a step for cleaning the compute environment by deleting residual data regarding the computing job in at least one component of the compute environment.

More particularly, the cleaning step may comprise deleting residual data regarding the computing job in every component of the compute environment, except for the encrypted output data.

The method according to the invention may comprise a step for transferring output data, provided during or at the end of the computing job, to at least one storage means of the HPC machine, or to a device external to the HPC machine, after the de-isolating step.

The output data may be transferred through a wired or a wireless data link.

According to another aspect of the same invention, it is proposed a High Performance Computing, HPC, machine, for carrying out a computing job, said HPC machine comprising:
- computing resources for carrying out the computing job, said computation resources comprising at least one computation node, and
- a so-called quarantine manager;
configured for carrying out the method according to the invention.

Of course, the HPC machine may comprise other components than those listed above. For example, the HPC machine may comprise:
- a so-called workload manager for selecting the resources for carrying out the computation job;
- an operating manager for managing operation of the HPC machine,
- storage means for storing data in said HPC machine,
- a user frontend interface for submitting a computation job, downloading input data for the computation job,
- communication means,
- etc.

The HPC machine may comprise several computing nodes that are located on a same geographical site, for example in a same building or in a same room.

The HPC machine may comprise several computing nodes that are distant from each other, i.e. located in different geographical sites, for example in different towns.

### Description of the figures and embodiments

Other advantages and characteristics will become apparent on examination of the detailed description of an embodiment which is in no way limitative, and the attached figures, where:
- Figure 1 is a diagrammatic representation of a non-limitative example of a method according to the invention; and
- Figure 2 is a diagrammatic representation of a non-limitative example of a HPC machine according to the invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

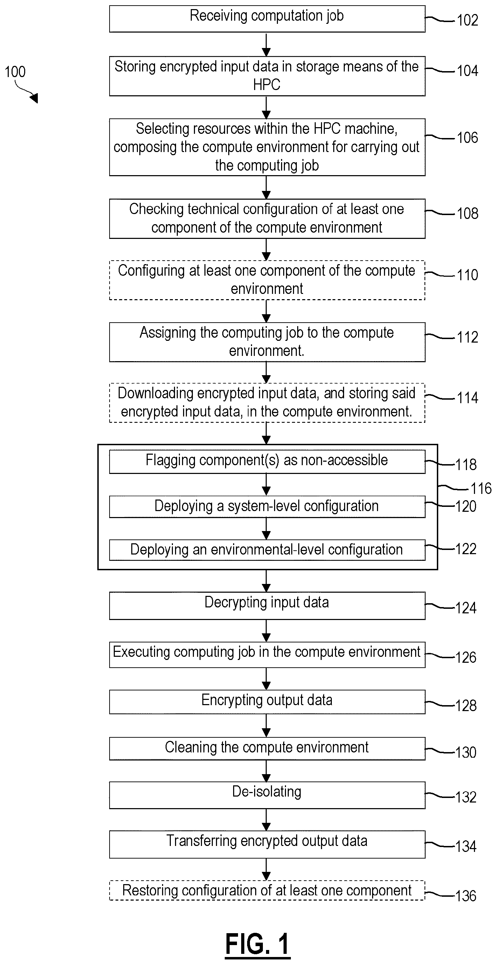

FIGURE 1 is a diagrammatic representation of a non-limitative example of a method according to the present invention.

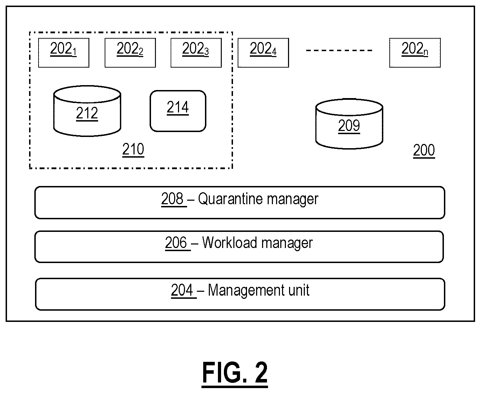

The method 100, shown in FIGURE 1, may be used to carry out a computing job on a HPC machine. A non limitative example of HPC machine according to the invention is shown in FIGURE 2.

The method 100 comprises a step 102 during which a user submits a computing job to the HPC machine. The job may comprise:
- information regarding the computation(s) that should be carried out by the HPC machine, preferably in a so-called computation file;
- input data for the computation(s), and
- optionally, at least one technical specification the HPC machine should meet for carrying out the computing job, preferably in a configuration file.

Input data is preferably encrypted and stored in storage means in the HPC machine, for example during a step 104.

During a step 106, the resources needed for carrying out the computing job are selected within the HPC machine. This selection may be carried out by a workload management unit, also called workload manager, as a function of the information contained in the computation file, and optionally the amount of input data. The latter may be given in the computation file, for example.

The resources selected may contain one or several computing nodes, storage means, etc. and more generally all the technical components necessary to carry out the computation job. In the following, without loss of generality, it is considered that the selected resources comprise several components forming a compute environment.

During a step 108, at least one component of the compute environment is checked in order to make sure that said component meets the technical specification(s), listed in the configuration file, for carrying out the compute job. At least one technical specification may relate to a software executed by said component, a security patch installed in said component, a version of the operating system of said component, etc.

If at least one of the components of the compute environment does not meet the requirement(s) for carrying out the computing job, a step 110 configures said component to render said component compliant to said requirement(s). Such a configuration may comprise at least one of the following:
- downloading and installing a software needed for carrying out the computing job,
- downloading and installing a security patch on said component,
- upgrading or downgrading the version of a software, or of an operating system, already installed in said component.

Steps 108 and 110 may be carried out by an operating management unit of the HPC machine.

When the components of the compute machine are ready, i.e. the components of the compute machine meet the technical requirements for carrying out the computing job, the compute environment is ready for carrying out the computing job.

During a step 112, the computing job is assigned to the compute environment. In some embodiments, the computation tasks are assigned to the computing nodes of the compute environment, for example by a workload manager of the HPC machine.

An optional step 114 downloads encrypted input data in storage means of the compute environment. The input data is stored in storage means in encrypted form and remains encrypted as long as the compute environment is not in isolated mode. This step may not be carried out, for example if the storage means used at step 104 are part of the compute environment.

Method 100 comprises, according to the present invention, a step 116 for isolating the compute environment, so that only the user to whom the computing job belongs may interact with said compute environment, i.e. with the components of the compute environment.

The isolating step 116 may comprise one or several operations for:
- preventing access to said compute environment to any third party. For example, this may be done through a so-called quarantine manager regulating access to said compute environment;
- preventing the compute environment from sending data to outside the compute environment. For example, this may be done by stopping or limiting the upload communication link between the compute environment and the rest of the HPC machine;
- preventing the compute environment from receiving data from outside the compute environment. For example, this may be done by stopping or limiting the download communication link between the compute environment and the rest of the HPC machine.

The isolating step 116 may comprise an optional step 118 flagging at least one component of the compute environment as non-accessible, in particular for communications or data exchange, so that said component may not be accessed from outside of the HPC machine.

The isolating step 116 may comprise an optional step 120 deploying at least one system-level configuration inside said compute environment, i.e. on at least one component of the compute environment, for example by executing one or several configuration files in said compute environment.

The isolating step 116 may comprise an optional step 122 deploying at least one environmental-level configuration inside said compute environment, i.e. on at least one component located outside of the compute environment, for example by executing one or several configuration files.

At the end of step 116, the compute environment is isolated from its environment so that only the owner of the computing job may access said compute environment. In some embodiments, the owner may give limited access to third parties, for example for debugging operation, if needed.

The method 100 comprises, after step 116, a step 124 for decrypting the encrypted input data, for example by an agent for encrypting and decrypting data, installed in said compute environment.

The computing job is executed, in the compute environment, at a step 126, in a conventional manner.

Once the computing job is finished, the data output by the computing job is encrypted, for example by the same agent as the one used in step 128.

An optional step 130 cleans the compute environment for example by deleting residual data regarding the computing job in every component of the compute environment, except for the encrypted output data.

A step 132 de-isolates the compute environment. The de-isolation step consists in reversing, or cancelling, the isolation step 116 so that the compute environment is restored in the state it was just before the isolating step 116. For example, the de-isolation step comprises the following:
- flagging as accessible, the components of the compute environment that were accessible before the isolating step 116;
- establishing the communication to, and/or from, the compute environment by reversing/cancelling the system-level, and/or the environmental-level, configurations deployed during the isolating step 116.

The method 100 comprises a step 134 for transferring the encrypted output data to storage means of the HPC machine, or to a device external to the HPC machine, for example to storage means or a server located on the premises of the user. Once the output data is transferred, said output data is totally erased from the storage means of the compute environment.

If a component of the compute environment was configured at the optional step 110 to meet technical specification(s) required for the computing job, the configuration of said component may be restored as it was before step 110, at a step 136.

After optional step 136, the compute environment, i.e. the components forming the compute environment, are in the same state as they were before the computing job was received. These components are now available for carrying out a new computing job.

FIGURE 2 is a diagrammatic representation of a non-limitative example of a HPC machine according to the present invention.

The HPC machine 200, shown in FIGURE 2, may be used to carry out a method according to the invention, and in particular the method 100 of FIGURE 1.

The HPC machine 200 comprises several computing nodes 202₁-202ₙ. Each computing node may be a processor (CP) or a group of processors.

The HPC machine comprises a management unit 204 for managing the operation of the HPC machine 200 and a workload management unit 206, also called workload manager, for handling the computing jobs that are assigned to the HPC machine.

The HPC machine also comprises a unit 208, called quarantine manager, for isolating and de-isolating a compute environment.

A computing job request received from a user, for example through a user interface (non represented) of the HPC machine 200, is transmitted to the workload manager 206. The input data of the computing job is stored in a storage means 210 of the HPC machine 200.

The workload manager 206 selects, in the HPC machine 200, the resources for carrying out the computing job, as a function of the resources required for the computing job and the available resources in the HPC machine 200. More particularly, the workload manager 206 selects the computing nodes 202 required for carrying out the computing job. In the example shown in FIGURE 2, the computing nodes selected by the workload manager 206 are the computing nodes 202₁-202₃.

The computing nodes 202₁-202₃ selected by the workload manager 206 form a compute environment 210 for carrying out the computing job. The compute environment 210 also comprises storage means 212 for storing encrypted input data, encrypted output data, and the data actively used during the execution of the computing job.

The compute environment 210 may also comprise other software or hardware components, generally designated with the reference 214, such as an agent for encrypting and decrypting data, a communication agent, etc.

For example, the workload manager 206 may be configured to carry out step 106 and 112 of the method 100.

The quarantine manager 208 is configured to:
- check whether the configuration of the components of the compute environment 210 meets the technical requirements associated with the computing job, and
- if not, configure at least one component of said compute environment 210 accordingly.

For example, the quarantine manager 208 may be configured to carry out steps 108 and 110 of the method 100.

The quarantine manager 208 may also be configured to restore the configurations of the components of the compute environment 210 in the same state as they were before they were selected to carry out the computing job, after the computing job is carried out. For example, the quarantine manager 208 may be configured to carry out step 136, if applicable.

The quarantine manager 208 is also configured to isolate the compute environment 210 before the execution of the computing job, and to de-isolate said compute environment 210 after the execution of the computing job. The quarantine manager 208 may also be configured to transfer encrypted input data to storage means inside the compute environment 210, transfer output data to storage means 209 located outside the compute environment 210 or to a device external to the HPC machine 200. The quarantine manager 208 may also be configured to clean the compute environment 210, after execution of the computing job and after the output data is transferred to outside of said compute environment 210.

For example, the quarantine manager 208 may be configured to carry out optional steps 114, 116, 130, 132 and 134 of the method 100.

Moreover, the quarantine manager 208 may be configured to control access to the compute environment 210 as long as said compute environment 210 is in isolated state so that the interaction with said compute environment is reserved only to the user. In some embodiments, the user may also give limited access to said compute environment 210 to a third party, for example for debugging a component of the compute environment 210. Such an access may be given and controlled through the quarantine manager 208.

The compute environment 210 is configured to carry out the computing job. For example, the compute environment 210 may be configured to carry out steps 124-128.

At least one of the units 204-208 may be a hardware unit, such as a processor, a computer, a server, etc.

At least one of the units 204-208 may be a software unit, such as a computer program, a virtual machine, etc.

At least one of the units 204-208 may be a combination of at least one hardware unit and a software unit.

At least one of the units 204-208 may be individual unit, independent from the other units.

At least two of the units 204-208 may be combined in a one and single unit.

Of course, the invention is not limited to the examples detailed above.

## Claims

1. A method (100) for carrying out a computing job for a client on a High Performance Computing, HPC, machine (200), said method (100) comprising the following steps:
- Selecting (106), in said HPC machine (200), the resources (202₁-202₃,212,214) for carrying out said computing job, said resources (202₁-202₃,212,214) forming a so-called compute environment (210) comprising one or several computing nodes (202₁-202₃), and
- performing (126) the computing job in said compute environment (210);
wherein said method (100) also comprises before the step (126) of performing the computing job, a step (116) for isolating said compute environment (210) from the rest of the HPC machine (200) so that interaction with said compute environment (210) is restricted to said client.

2. The method (100) according to preceding claim, further comprising, before the isolation step (116), a step (114) for loading data to be computed in storage means (212) located in the compute environment (210), in encrypted form.

3. The method (100) according to the preceding claim, further comprising, after the isolation step (116), a step (124) for decrypting the loaded input data.

4. The method (100) according to any of the preceding claims, further comprising, before the isolating step (116):
- a step (108) for checking the compliance of at least one component of the compute environment (210) to at least one technical specification specific to the computing job, and
- in case said component is not compliant, a step (110) for configuring said component rendering said component compliant with said at least one technical specification.

5. The method (100) according to any of the preceding claims, wherein the step (116) for isolating the compute environment (210) comprises at least one of the following operations:
- preventing access to said compute environment (210) to any third party;
- preventing the compute environment (210) from sending data to outside the compute environment (210);
- preventing the compute environment (210) from receiving data from outside the compute environment (210).

6. The method (100) according to any of the preceding claims, wherein the step (116) for isolating the compute environment (210) comprises carrying out at least one of the following operations:
- flagging (118) at least one component of the compute environment (210) as non-accessible;
- deploying (120) at least one system-level configuration inside said compute environment (210);
- deploying (122) at least one environmental-level configuration outside said compute environment (210), and more particularly to at least one network component and/or to an interconnect component.

7. The method (100) according to any of the preceding claims, further comprising, after computation of the computing job:
- a step (128) for encrypting data output by the computation of the computing job, and
- optionally storing said encrypted output data in a storage means in the compute environment (210);
while the compute environment (210) is in isolated state.

8. The method (100) according to any of the preceding claims, further comprising, after the computing job is carried out, a step (132) for de-isolating the compute environment (210) from the rest of the HPC machine so that interaction with said compute environment (210) is restored.

9. The method (100) according to the previous step, further comprising, a step (130) for cleaning the compute environment by deleting residual data regarding the computing job in at least one component of the compute environment.

10. A High Performance Computing, HPC, machine (200), for carrying out a computing job, said HPC machine (200) comprising:
- computing resources (202₁-202ₙ) for carrying out the computing job, said computation resources comprising at least one computation node, and
- a so-called quarantine manager (208);
configured for carrying out the method (100) according to at least one of the preceding claims.
